# EUROPEAN PATENT SPECIFICATION

(11) **EP 3 872 522 B1**
(45) Date of publication and mention of the grant of the patent: **18.01.2023**
(21) Application number: 21184916.1
(22) Date of filing: 09.07.2021
(51) Int. Cl.: G01S 7/48, G01S 7/481, B60S 1/54, B60S 1/56, G01S 17/931, G01S 7/497

(54) **LIDAR BASE, LIDAR DEVICE AND AUTONOMOUS VEHICLE**
LIDAR BASIS, LIDARVORRICHTUNG UND AUTONOMES FAHRZEUG
BASE LIDAR, DISPOSITIF LIDAR ET VÉHICULE AUTONOME

(30) Priority: 03.12.2020 CN 202011393891
(43) Date of publication of application: 01.09.2021
(73) Proprietor: BEIJING BAIDU NETCOM SCIENCE AND TECHNOLOGY CO. LTD., 100085 Beijing (CN)
(72) Inventor: REN, Rui, BEIJING, 100085 (CN); FAN, Zongtao, BEIJING, 100085 (CN); WANG, Bolei, BEIJING, 100085 (CN); HU, Jingsheng, BEIJING, 100085 (CN); ZHANG, Jiali, BEIJING, 100085 (CN); YUAN, Yuquan, BEIJING, 100085 (CN); ZHANG, Yanfu, BEIJING, 100085 (CN)
(74) Representative: Brevalex

(56) References cited:
- CN-A- 110 764 071
- US-A1- 2018 015 907
- US-A1- 2018 354 468

## Description

### TECHNICAL FIELD

The present disclosure relates to the technical field of automatic driving, in particular to the technical field of lidar devices, and in particular to a lidar base, a lidar device, and an autonomous vehicle.

### BACKGROUND

US2018015907A1 discloses that a device for cleaning a sensor can include a first valve, a second valve, a set of fluid nozzles, and a housing structure. The housing structure includes a first channel to enable fluid to move from the first valve to the set of fluid nozzles, a cavity, a second channel to enable air to move from the second valve to the cavity, and a slit opening to enable air to move from the cavity to outside the housing structure.

US2018354468A1 discloses a nozzle including: a first member comprising an annular first flange extending radially-inwardly from a first base; and a second member having an annular second flange extending radially-outwardly from a second base, the first and second flanges forming a circumferential passage and an at least partially circumferential outlet.

CN110764071A discloses a lidar protective cover and a lidar, relates to the technical field of lidar and can be used for autonomous driving vehicles. The specific implementation scheme is that a light transmitting window is arranged between the top cover and the bottom cover, the top cover, the bottom cover and the light transmitting window form a receiving cavity for accommodating the electrical components of the lidar, and an air guide device is used to guide the pressurized airflow to make the pressurized airflow inject toward the light transmitting window to flush the light transmitting window, which cleans the light transmitting window and prevents rain, snow and sand from attaching to the light transmitting window to affect the perception of the lidar, thereby improving the lidar adaptability to special weather conditions.

The lidar device with a cleaning function in the related art usually cleans the outer surface of the lidar device by means of water flow. After cleaning, the water droplets remaining on the outer surface of the lidar device easily affect the laser signal, such as occlusion, refraction, and scattering, thereby causing point cloud data to be distorted and discontinuous, and affecting the working performance of the lidar device.

### SUMMARY

The present disclosure provides a lidar base, a lidar device, and an autonomous vehicle.

According to one aspect of the present disclosure, a lidar base is provided and includes: a base body configured to install a lidar assembly; a cover plate disposed on the base body, and a diversion gap being defined between the cover plate and the base body, wherein an air outlet of the diversion gap is arranged such that the air outlet is toward the lidar assembly in a case where the lidar assembly is installed on the base body; wherein the base body is provided with an air passage, and an air outlet end of the air passage is in communication with the diversion gap; wherein an outer wall of the base body is provided with a groove, the cover plate and the groove define the diversion gap, and the air outlet end of the air passage extends to a bottom wall of the groove; wherein an upper edge of the groove is provided with a first inclined surface, and an inner side surface of the cover plate is spaced apart from the first inclined surface to define the air outlet of the diversion gap; the outer wall of the base body includes an arc-shaped surface formed by an upper edge of the first inclined surface extending upwardly in an arc shape, and the arc-shaped surface is recessed inwardly.

According to another aspect of the present disclosure, a lidar device is provided and includes: a lidar assembly which includes a housing; and the lidar base according to the above-mentioned embodiment of the present disclosure, wherein the housing is installed on the base body.

According to yet another aspect of the present disclosure, an autonomous vehicle is provided and includes: the lidar device according to the above-mentioned embodiment of the present disclosure.

By adopting the above technical solution, the technical problem in the related art that cleaning the lidar assembly by means of spraying water may easily cause the lidar device to work abnormally is solved by the lidar base of the embodiment of the present disclosure. The lidar base of the embodiment of the present disclosure not only has a good cleaning effect on the lidar assembly, but also can ensure the working stability of the lidar assembly, and also has the advantages of a simple structure and low cost.

It should be understood that the content described in this section of the invention is not intended to limit the key or important features of the embodiments of the present disclosure, nor is it intended to limit the scope of the present disclosure. Other features of the present disclosure will be easily understood by the following description.

### BRIEF DESCRIPTION OF THE DRAWINGS

With reference to the following detailed description, the above and other features, advantages, and aspects of the embodiments of the present disclosure will become more apparent, in combination with the drawings. In the drawings, the same or similar reference signs indicate the same or similar elements, in which:
FIG. 1 is a schematic structural diagram of a lidar base according to the present disclosure;
FIG. 2 is a schematic structural diagram of a lidar device according to an embodiment of the present disclosure;
FIG. 3 is a front view of a lidar device according to an embodiment of the present disclosure; and
Fig. 4 is a partial enlarged schematic diagram of the portion A in Fig. 3.

Explanation of reference signs:
lidar device 1;
lidar base 100;
base body 10; upper surface 10a; central hole 10b; arc-shaped surface 10c; air passage 11; groove 12; first inclined surface 12a;
cover plate 20; diversion gap 20a; air outlet 20b; second inclined surface 20c; third inclined surface 20d; mounting hole 21; fastener 22;
sealing gasket 30; notch 30a;
lidar assembly 200; housing 201.

### DETAILED DESCRIPTION

The exemplary embodiments of the present disclosure are described below with reference to the accompanying drawings, which include various details of the embodiments of the present disclosure to facilitate understanding, and should be considered as merely exemplary. Also, descriptions of well-known functions and structures are omitted from the following description for clarity and conciseness.

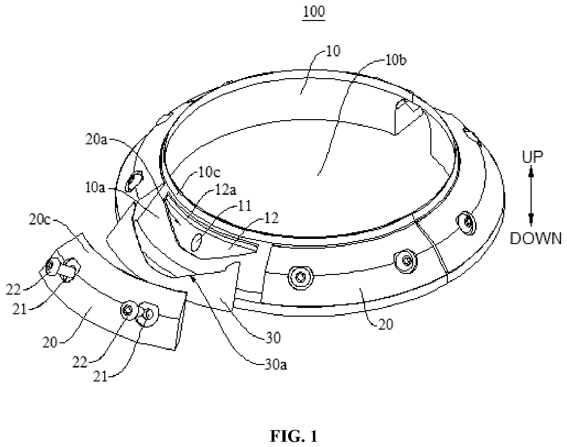

A lidar base 100 according to an embodiment of the present disclosure will be described below with reference to FIGS. 1 to 4.

As shown in FIG. 1, the lidar base 100 includes a base body 10 and a cover plate 20.

Specifically, the base body 10 is configured to install a lidar assembly 200. The cover plate 20 is disposed on the base body 10, and a diversion gap 20a is defined between the cover plate 20 and the base body 10. Wherein, an air outlet 20b of the diversion gap 20a is arranged toward the lidar assembly 200.

The lidar base 100 according to the embodiment of the present disclosure may be applied to a lidar device 1, specifically, it may be used to support and fix the lidar assembly 200 of the lidar device 1.

Illustratively, the diversion gap 20a is further provided with an air inlet end. The air inlet end of the diversion gap 20a can be communicated with the output end of an air pump to introduce high-pressure airflow into the diversion gap 20a. The high-pressure airflow is secondarily compressed and guided in the diversion gap 20a and flows out from the air outlet 20b of the diversion gap 20a, and then flow past the lidar assembly 200 installed on the base 10.

Preferably, the gap between the inner surface of the cover plate 20 and the upper surface 10a of the base body 10 can be less than 2mm. Therefore, the height of the diversion gap 20a is relatively narrow, which can reduce the flow area of the high-pressure airflow in the diversion gap 20a. Therefore, the high-pressure airflow is compressed twice, and the air pressure of the high-pressure airflow in the diversion gap 20a is increased, thereby increasing the flow rate of the high-pressure airflow out from the air outlet 20b.

In an example, there may be one diversion gap 20a, and the air outlet 20b of the diversion gap 20a extends along the circumferential direction of the base body 10, so that the air outlet 20b of the diversion gap 20a surrounds the lidar assembly 200, so as to achieve cleaning in the circumferential direction of the lidar assembly 200, with no dead angle.

In another example, there may be a plurality of diversion gaps 20a, which are arranged at intervals along the circumferential direction of the base body 10. Wherein, the air outlets 20b of the plurality of diversion gaps 20a are connected in sequence and extend along the circumference of the base body 10, so as to achieve cleaning in the circumferential direction of the lidar assembly 200 as well, with no dead angle.

According to the lidar base 100 of the embodiment of the present disclosure, by disposing the cover plate 20 on the base body 10 to define the diversion gap 20a, the high-pressure airflow entering the diversion gap 20a is secondarily compressed, flows in the direction toward the lidar assembly 200 at a higher flow rate and forms a strong impact force on the lidar assembly 200, thereby cleaning the attachments such as liquid, dust, and dirt on the outer surface of the lidar assembly 200. Compared with the method of cleaning the lidar assembly by spraying water in the related art, the lidar base 100 of the embodiment of the present disclosure can avoid the situation that lidar device 1 cannot work normally due to the interference with the laser signal by water droplets left after spraying water. Therefore, the lidar base 100 according to the embodiment of the present disclosure not only has a good cleaning effect on the lidar assembly 200, but also can ensure the working stability of the lidar assembly 200, and also has the advantages of a simple structure and low cost.

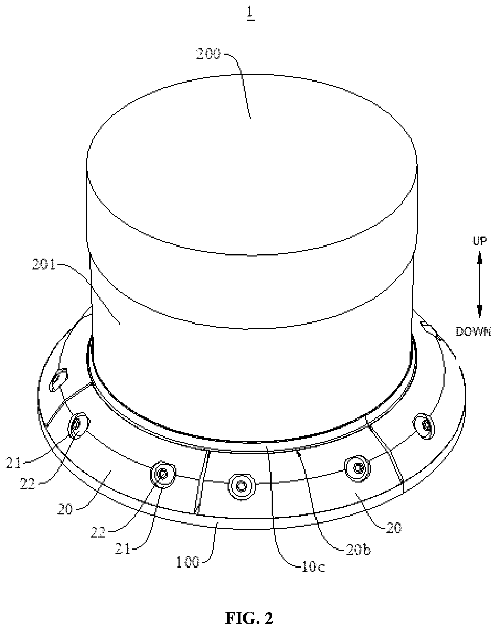

In one embodiment, as shown in FIGS. 1 and 2, the base body 10 is configured in a ring shape to define a central hole 10b, and the central hole 10b is configured to install the lidar assembly 200. Wherein, the extending direction of the diversion gap 20a is towards the central axis of the base body 10 and is inclined upwardly.

Illustratively, the housing 201 of the lidar assembly 200 may be embedded in the central hole 10b, and the base body 10 is arranged adjacent to the lower end of the lidar assembly 200.

An extension direction of the diversion gap 20a can be understood as a direction in which the high-pressure airflow flows in the diversion gap 20a toward the air outlet 20b. The extension direction of the diversion gap 20a is set toward a center axis of the base body 10 and inclined upwardly, and thus the opening direction of the air outlet 20b is set toward the center axis of the base body 10 andis inclined upwardly. Therefore, the high-pressure airflow flows out from the air outlet 20b and then flows in a direction toward the lidar assembly 200 installed in the central hole 10b, and the flow direction of the high-pressure airflow has an upward inclination angle with respect to the outer surface of the lidar assembly 200, so that the high-pressure airflow can follow the outer surface of the lidar assembly 200 from bottom to top, thereby improving the cleaning effect of the lidar assembly 200.

As shown in FIGS. 1, 3 and 4, the base body 10 is provided with an air passage 11, and an air outlet end of the air passage 11 is in communication with the diversion gap 20a.

In the embodiment of the present disclosure, the air passage 11 is used to guide the high-pressure airflow to the diversion gap 20a.

Illustratively, the cover plate 20 is provided on the upper surface 10a of the base body 10, and there is a gap between the inner surface of the cover plate 20 (that is, a surface of the cover plate 20 facing the base body 10) and the upper surface 10a of the base body 10, so as to define the diversion gap 20a. In addition, the cover plate 20 is disposed corresponding to the position of the air passage 11, so that the diversion gap 20a communicates with the air outlet end of the air passage 11.

The air passage 11 penetrates the base body 10 in the height direction of the base body 10 (i.e., the up-to-down direction in the figure), so that the air passage 11 communicates with the upper surface 10a and the lower surface of the base body 10. The air inlet end of the air passage 11 may be the lower end of the air passage 11, that is, the end of the air passage 11 extending to the lower surface of the base body 10; the air outlet end of the air passage 11 may be the upper end of the air passage 11, that is, the end of the air passage 11 extending to the upper surface 10a of the base body 10.

The air passage 11 can extend in a direction parallel to the central axis of the base body 10, or can extend in a direction at a certain angle with the central axis of the base body 10, as long as the upper surface 10a and the lower surface of the base body 10 are communicated.

Illustratively, the lidar device 1 includes an air pump (not shown in the figure), and the output end of the air pump is connected to the air inlet end of the air passage 11. The high-pressure airflow generated by the air pump enters the air passage 11 through the air inlet end of the air passage 11, and the high-pressure airflow flows along the air passage 11 and flows out through the air outlet end of the air passage 11. The high-pressure airflow enters the diversion gap 20a and collides with the inner surface of the cover plate 20, flows along the diversion gap 20a, and finally flows out from the air outlet 20b of the diversion gap 20a.

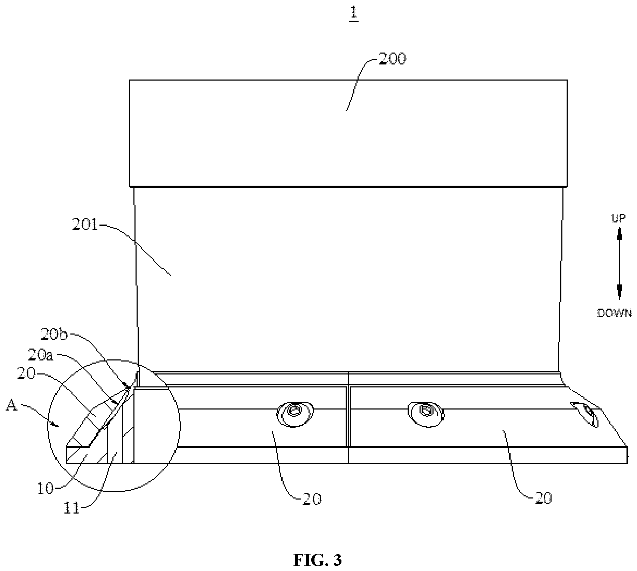

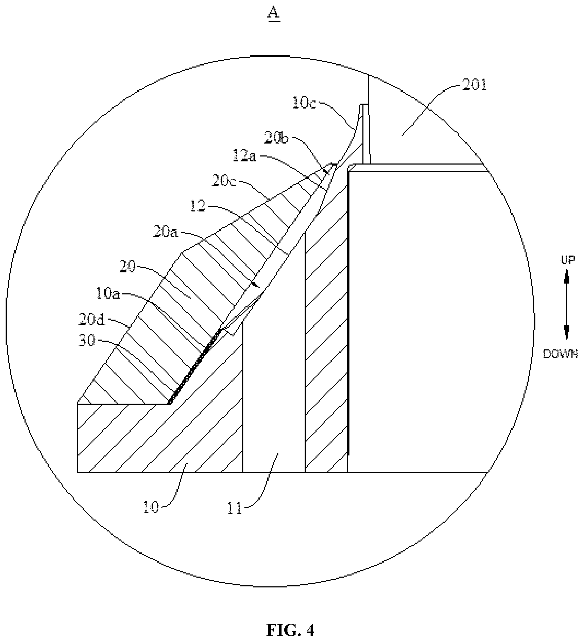

In one embodiment, as shown in FIGS. 3 and 4, the upper surface 10a of the base body 10 is inclined upwardly in a direction toward the central axis of the base body 10.

Illustratively, the upper surface 10a of the base body 10 may be configured as a tapered surface, and the cross-sectional area of the upper surface 10a of the base body 10 gradually decreases in a direction from bottom to top. The inner surface of the cover plate 20 can also be inclined upwardly in the direction toward the central axis of the base body 10, and the inner surface of the cover plate 20 and the upper surface 10a of the base body 10 form a gap at the top end of the diversion gap 20a to define the air outlet 20b of the diversion gap 20a. Therefore, the direction of the air outlet 20b of the diversion gap 20a can be toward the central axis of the base body 10 and be inclined upwardly, the high-pressure airflow flows out from the air outlet 20b of the diversion gap 20a and forms an upward angle with the outer surface of the lidar assembly 200, and thus the high-pressure airflow flows upwardly along the outer surface of the lidar assembly 200, thereby improving the cleaning effect on the outer surface of the lidar assembly 200.

As shown in FIG. 1, the outer wall of the base body 10 is provided with a groove 12, the cover plate 20 and the groove 12 define the diversion gap 20a, and the air outlet end of the air passage 11 extends to the bottom wall of the groove 12.

Illustratively, the groove 12 may be provided on the upper surface 10a of the base body 10. The inner surface of the cover plate 20 and the upper surface 10a of the base body 10 are arranged to be close to each other, and the inner surface of the cover plate 20 is disposed on the groove 12 to define the diversion gap 20a within the groove 12. The shape of the groove 12 may be configured to be approximately triangular, and the width of the groove 12 gradually increases in the direction toward the central hole 10b of the base body 10. Therefore, the flow area of the air outlet 20b of the diversion gap 20a may be increased and thus the flow quantity of the high-pressure airflow out from the air outlet 20b is increased. Moreover, by arranging the groove 12 on the outer wall of the base body 10, and defining the diversion gap 20b by the cover plate 20 and the groove 12, the processing difficulty of the diversion gap 20b can be reduced and the processing efficiency can be improved.

As shown in FIGS. 1 and 4, the upper edge of the groove 12 is provided with a first inclined surface 12a, and the inner surface of the cover plate 20 is spaced from the first inclined surface 12a to define the air outlet 20b of the diversion gap 20a.

Illustratively, the upper edge of the groove 12 may be the top side wall of the groove 12, and the top side wall of the groove 12 extends obliquely from the bottom wall of the groove 12 to the upper surface 10a of the base body 10, so as to form the first inclined surface 12a. The gap between the cover plate 20 and the first inclined surface 12a defines the air outlet 20b of the diversion gap 20a. As a result, the distance between the first inclined surface 12a and the inner surface of the cover plate 20 is gradually reduced in the flow direction of the high-pressure airflow, and the flow area of the high-pressure airflow can be reduced in the process that the high-pressure airflow flows outward along the air outlet 20b, thereby further increasing the flow rate of the high-pressure airflow.

As shown in FIGS. 1, 2 and 4, the outer wall of the base body 10 further includes an arc-shaped surface 10c, and the arc-shaped surface 10c is formed by the upper edge of the first inclined surface 12a extending upwardly in the arc shape, and the arc-shaped surface 10c is recessed inwardly. Wherein, the arc-shaped surface 10c recessed inwardly means that the curved direction of the arc-shaped surface 10c is set toward the inner side of the base body 10.

Illustratively, the tangent direction of the upper end of the arc-shaped surface 10c may be set parallel to the central axis of the base body 10. In this way, after the high-pressure airflow flows out from the air outlet 20b of the diversion gap 20a, the high-pressure airflow flows upwardly along the arc-shaped surface 10c, and finally flows upwardly in a direction parallel to the central axis of the base body 10 under the guidance of the arc-shaped surface 10c. Therefore, the high-pressure airflow flows upwardly along the outer surface of the lidar assembly 200, and the wind loss caused by the collision of the airflow with the outer surface of the lidar assembly 200 is reduced.

Thus, the portion of the upper surface 10a of the base body 10 adjacent to the upper end is configured as an arc surface 10c, which can guide the high-pressure airflow, and the guided high-pressure airflow can flow along the outer surface of the lidar assembly 200, thereby improving the cleaning effect of the lidar assembly 200.

In one embodiment, as shown in FIGS. 1 and 4, the outer surface of the cover plate 20 (that is, a surface of the cover plate 20 facing away from the base body 10) is provided with a second inclined surface 20c which extends upwardly and obliquely to the upper edge of the cover plate 20 in the direction toward the central axis of the base body 10.

Illustratively, as shown in FIG. 4, the outer surface of the cover plate 20 includes a second inclined surface 20c and a third inclined surface 20d that are connected to each other, wherein the second inclined surface 20c is located above the third inclined surface 20d, and the lower edge of the inclined surface 20c is connected to the upper edge of the third inclined surface 20d. The second inclined surface 20c and the third inclined surface 20d are each configured as a tapered surface, and the second inclined surface 20c and the third inclined surface 20d are both inclined upwardly in a direction toward the central axis of the base body 10. The angle between the second inclined surface 20c and the horizontal plane is smaller than the angle between the third inclined surface 20d and the horizontal plane.

It can be understood that when the high-pressure airflow flows out at high speed from the air outlet 20b of the diversion gap 20a, a negative pressure is formed at the air outlet 20b of the diversion gap 20a, so that the external airflow can be guided along the second inclined surface 20c to the air outlet 20b of the gap 20a. Therefore, by providing the second inclined surface 20c on the outer surface of the cover plate 20, it is possible to guide the external airflow during the process of the high-pressure airflow flowing out from the air outlet 20b of the diversion gap 20a, thereby increasing the flow quantity of airflow flowing along the outer surface of the lidar assembly 200 and further improving the cleaning effect of the lidar assembly 200.

In one embodiment, as shown in FIGS. 1 and 4, a sealing gasket 30 is provided between the cover plate 20 and the base body 10, the sealing gasket 30 is provided with a notch 30a, and the notch 30a is arranged to keep clear of the groove 12.

Illustratively, the sealing gasket 30 may be made of a non-metallic material, such as rubber, silicone and other materials. Edges of the notch 30a of the gasket 30 is aligned with edges of the groove 12 to keep clear of the groove 12. As a result, the air tightness between the cover plate 20 and the upper surface 10a of the base body 10 can be improved, high-pressure airflow can be prevented from leaking from the gap between the cover plate 20 and the upper surface 10a of the base body 10, and the high-pressure airflow can only flow out through the air outlet 20b of the diversion gap 20a. In addition, the notch 30a for keeping clear of the groove 12 is provided on the sealing gasket 30 to prevent the sealing gasket 30 from interfering with the high-pressure airflow.

In one embodiment, there may be a plurality of diversion gaps 20a, which are arranged at intervals along the circumferential direction of the base body 10. There are a plurality of air passages 11, which are arranged in one-to-one correspondence with the plurality of diversion gaps 20a.

Illustratively, the upper surface 10a of the base body 10 may be provided with a plurality of grooves 12, the plurality of grooves 12 are distributed at intervals along the circumference of the base body 10, and the cover plate 20 is arranged on the base body 10, and thus the plurality of diversion gaps 20a distributed along the circumferential direction of the base body 10 at intervals are defined. The plurality of air passages 11 are arranged in a one-to-one correspondence with the plurality of grooves 12, and the air outlet end of each air passage 11 extends to the bottom wall of the corresponding groove 12 to communicate with the diversion gap 20a.

By providing the plurality of diversion gaps 20a in the circumferential direction of the base body 10, the plurality of diversion gaps 20a can be arranged around the lidar assembly 200, so as to spray high-pressure airflow toward the lidar assembly 200 in the circumferential direction of the lidar assembly 200, so as to realize the 360-degree non-dead-angle cleaning of the lidar assembly 200, and improve the cleaning effect.

In an example, the air inlet ends of the plurality of air passages 11 may be connected to the output ends of the air pump through a plurality of guide tubes. Among them, each guide tube can be provided with an air valve for opening and closing the high-pressure airflow. By controlling the opening and closing of the air valve, the airflow in each diversion gap 20a can be individually controlled, so as to realize a cleaning function for a specific area of the guide assembly.

In other examples of the present disclosure, a hermetic cavity may be provided below the base body 10, the air inlet ends of the plurality of air passages 11 are in communication with the hermetic cavity, and the air pump is arranged in the hermetic cavity to generate high-pressure airflow within the hermetic cavity.

In one embodiment, the cover plate 20 is configured in a ring shape, and the cover plate 20 and the base body 10 define a plurality of diversion gaps 20a.

Illustratively, the cover plate 20 may be an integral piece, and the inner surface of the cover plate 20 and the plurality of grooves 12 on the upper surface 10a of the base body 10 jointly define a plurality of diversion gaps 20a. As a result, the structure of the cover plate 20 is relatively simple, the processing is relatively convenient, and the assembly between the cover plate 20 and the base body 10 is also relatively convenient, which can further reduce the manufacturing cost of the lidar base 100 and improve the assembly efficient of the lidar base 100.

In another embodiment, as shown in FIGS. 1 to 3, there are a plurality of cover plates 20, which are arranged at intervals along the circumference of the base body 10. Each cover plate 20 and the base body 10 respectively define the diversion gap 20a.

Illustratively, the plurality of cover plates 20 are individually provided, and the plurality of cover plates 20 are arranged in a one-to-one correspondence with the plurality of grooves 12 on the base body 10, and each cover plate 20 and its associated groove 12 separately define a diversion gap 20a. Wherein, the side edges of two adjacent cover plates 20 are connected, so that the plurality of cover plates 20 are jointed with each other in the circumferential direction of the base body 10 to form a ring shape.

By providing the plurality of cover plates 20, the corresponding cover plate 20 can be removed separately in a case that a certain diversion gap 20a is blocked, without removing all the cover plates 20, so as to facilitate cleaning and maintenance of a single diversion gap 20a.

In one embodiment, as shown in FIGS. 1 and 2, the cover plate 20 and the upper surface 10a of the base body 10 are fixedly connected by a fastener 22.

Illustratively, the cover plate 20 is provided with two mounting holes 21 spaced apart from each other, the upper surface 10a of the base body 10 is provided with screw holes corresponding to the positions of the two mounting holes 21, and the fasteners 22 pass through the mounting holes 21 and fit the screw holes, so as to fix the cover plate 20 on the upper surface 10a of the base body 10. Wherein, the fastener 22 may be a screw.

In addition, in other embodiments of the present disclosure, the cover plate 20 and the upper surface 10a of the base body 10 may also be connected in other detachable way, such as snapping or gluing.

The laser radar device 1 according to another embodiment of the present disclosure will be described below with reference to FIGS. 2 to 4.

As shown in FIGS. 2 to 4, the lidar device 1 includes the lidar assembly 200 and the lidar base 100 according to the above-mentioned embodiment of the present disclosure. Specifically, the lidar assembly 200 includes a housing 201, and the housing 201 is installed on the base body 10. For example, the housing 201 may be embedded in the central hole 10b of the base body 10.

Illustratively, the lidar assembly 200 further includes a transmitting part and a receiving part provided within the housing 201, the transmitting part is used for transmitting laser signals, and the receiving part is used for receiving the laser signals that are sent back. The base body 10 is sleeved on the outside of the housing 201 and adjacent to the lower end of the housing 201, the direction of the air outlet 20b of the diversion gap 20a is set toward the outer surface of the housing 201, and the direction of the air outlet 20b is at an angle to the outer surface of the housing 201.

Further, the lidar device 1 further includes an air pump for generating high-pressure airflow, and the output end of the air pump is communicated with the air inlet end of the air passage 11 to introduce the high-pressure airflow into the diversion gap 20a through the air passage 11.

According to the lidar device 1 of the embodiment of the present disclosure, by using the lidar base 100 of the above-mentioned embodiment of the present disclosure, it can not only achieve a better self-cleaning effect on the housing 201 of the lidar assembly 200, but also can ensure the working stability of the lidar assembly 200 at the same time of cleaning, and it has the advantages of a simple structure and low cost.

According to an embodiment of yet another aspect of the present disclosure, an autonomous vehicle is also provided, which includes the lidar device 1 according to the above-mentioned embodiment of the present disclosure.

By adopting the above solution, the lidar base 100 according to the embodiment of the present disclosure can not only achieve the cleaning effect on the outer surface of the lidar assembly 200, but also can ensure the working stability of the lidar assembly 200 at the same time of cleaning, and it also has the advantages of a simple structure and low cost.

In the description of this specification, it should be understood that the orientational or positional relationship indicated by the terms "center", "longitudinal", "transverse", "length", "width", "thickness", "up", "down", "front", "rear", "left", "right", "vertical", "horizontal", "top", "bottom", "inner", "outer", "clockwise", "counterclockwise", "axial", "radial", "circumferential" and so on is based on the orientational or positional relationship shown in the drawings, and is only for the convenience of describing the present disclosure and simplifying the description, rather than indicating or implying that the referred device or element must have a specific orientation, be constructed and operated in a specific orientation, and therefore cannot be understood as a limitation of the present disclosure.

In addition, the terms "first" and "second" are only used for descriptive purposes, and cannot be understood as indicating or implying relative importance or implicitly indicating the number of the referred technical features. Thus, the features defined by "first" and "second" may explicitly or implicitly include one or more of these features. In the description of the present disclosure, "plurality of" means two or more than two, unless otherwise specifically defined.

In the present disclosure, the terms "installed", "connected", "connecting", "secured" and so on should be understood in a broad sense, unless otherwise specifically stated and defined. For example, it may be fixedly connected, be detachably connected, or be integral; it may be mechanically connected, be electrically connected, or be communicatively connected; it may be connected directly, or be connected indirectly by an intermediate component; it may be interconnection between two elements, or be interaction between two elements. For those of ordinary skill in the art, the specific meanings of the above-mentioned terms in the present disclosure can be understood according to specific circumstances.

In the present disclosure, a first feature "on" or "under" a second feature may include the first feature directly contacted by the second feature, and also include the first feature indirectly contacted by the second feature with other feature therebetween, unless otherwise specifically stated and defined. In addition, a first feature "on", "above" or "on top of' a second feature may include the first feature directly above and obliquely above the second feature, or it simply means that the level of the first feature is higher than that of the second feature. A first feature "under", "beneath" or "on bottom of' a second feature may include the first feature directly beneath and obliquely beneath the second feature, or it simply means that the level of the first feature is lower than that of the second feature.

The above disclosure provides many different embodiments or examples to realize the different structures of the present disclosure. In order to simplify the disclosure of the present disclosure, the components and arrangements of specific examples are described above. Of course, they are only examples, and are not intended to limit the present disclosure. In addition, repeated reference numerals and/or reference signs may be used in different examples of the present disclosure. Such repetition is for the purpose of simplification and clarity, and does not indicate the relationships between the various embodiments and/or arrangements discussed herein.

The above-mentioned embodiments are not to be construed as limiting the scope of protection of the present disclosure.

## Claims

1. A lidar base (100), comprising:
a base body (10) configured to install a lidar assembly (200); and
a cover plate (20) disposed on the base body, and a diversion gap (20a) being defined between the cover plate and the base body, wherein an air outlet (20b) of the diversion gap is arranged such that the air outlet (20b) is toward the lidar assembly in a case where the lidar assembly (200) is installed on the base body (10);
wherein the base body (10) is provided with an air passage (11), and an air outlet end of the air passage is in communication with the diversion gap (20a);
wherein an outer wall of the base body (10) is provided with a groove (12), the cover plate (20) and the groove define the diversion gap (20a), and the air outlet end of the air passage extends to a bottom wall of the groove;
wherein an upper edge of the groove (12) is provided with a first inclined surface (12a), and an inner side surface of the cover plate (20) is spaced apart from the first inclined surface to define the air outlet of the diversion gap (20a);
**characterized in that**:
the outer wall of the base body (10) comprises an arc-shaped surface (10c) formed by an upper edge of the first inclined surface (12a) extending upwardly in an arc shape, and the arc-shaped surface is recessed inwardly.

2. The lidar base of claim 1, wherein the base body is configured in a ring shape to define a central hole (10b), and the central hole is configured to install the lidar assembly, and wherein an extension direction of the diversion gap (20a) is toward a central axis of the base body and is inclined upwardly.

3. The lidar base of claim 1 or 2, wherein an outer surface of the cover plate (20) is provided with a second inclined surface, and the second inclined surface extends upwardly and obliquely to an upper edge of the cover plate in a direction toward a central axis of the base body (10).

4. The lidar base of any one of claims 1-3, wherein a sealing gasket (30) is provided between the cover plate (20) and the base body (10), the sealing gasket is provided with a notch (30a), and the notch is arranged to keep clear of the groove (12).

5. The lidar base of any one of claims 1-4, wherein the diversion gap (20a) comprises a plurality of diversion gaps which are arranged at intervals along a circumferential direction of the base body (10).

6. The lidar base of claim 5, wherein the cover plate (20) is configured in a ring shape, and the cover plate and the base body (10) define the plurality of the diversion gaps.

7. The lidar base of claim 5, wherein the cover plate (20) comprises a plurality of cover plates which are arranged at intervals along the circumferential direction of the base body (10), and each of the cover plates and the base body (10) define the diversion gap respectively.

8. A lidar device (1), comprising:
a lidar assembly (200) which comprises a housing (201); and
the lidar base (100) according to any one of claims 1-7, wherein the housing is installed on the base body (10).

9. An autonomous vehicle, comprising:
the lidar device (1) according to claim 8.

## Patentansprüche

1. Lidar-Sockel (100), umfassend:
einen Sockelkörper (10), der ausgestaltet ist, eine Lidar-Baugruppe (200) anzubringen; und
eine Abdeckplatte (20), die auf dem Sockelkörper angeordnet ist, und einen Umleitungsspalt (20a), der zwischen der Abdeckplatte und dem Sockelkörper definiert ist, wobei ein Luftauslass (20b) des Umleitungsspalts so angeordnet ist, dass der Luftauslass (20b) zu der Lidar-Baugruppe zeigt, in einem Fall, wo die Lidar-Baugruppe (200) auf dem Sockelkörper (10) angebracht ist;
wobei der Sockelkörper (10) mit einem Luftdurchlass (11) versehen ist und ein Luftauslassende des Luftdurchlasses mit dem Umleitungsspalt (20a) in Kommunikation ist;
wobei eine Außenwand des Sockelkörpers (10) mit einer Rille (12) versehen ist, die Abdeckplatte (20) und die Rille den Umleitungsspalt (20a) definieren und sich das Luftauslassende des Luftdurchlasses zu einer Bodenwand der Rille erstreckt;
wobei eine obere Kante der Rille (12) mit einer ersten geneigten Oberfläche (12a) versehen ist und eine innere Seitenoberfläche der Abdeckplatte (20) von der ersten geneigten Oberfläche beabstandet ist, um den Luftauslass des Umleitungsspalts (20a) zu definieren;
**dadurch gekennzeichnet, dass**:
die Außenwand des Sockelkörpers (10) eine bogenförmige Oberfläche (10c) umfasst, die von einer oberen Kante der ersten geneigten Oberfläche (12a) gebildet wird, die sich in einer Bogenform nach oben erstreckt, und die bogenförmige Oberfläche nach innen vertieft ist.

2. Lidar-Sockel nach Anspruch 1, wobei der Sockelkörper in einer Ringform ausgestaltet ist, um ein Mittelloch (10b) zu definieren, und das Mittelloch ausgestaltet ist, die Lidar-Baugruppe anzubringen, und wobei eine Ausdehnungsrichtung des Umleitungsspalts (20a) zu einer Mittelachse des Sockelkörpers zeigt und nach oben geneigt ist.

3. Lidar-Sockel nach Anspruch 1 oder 2, wobei eine Außenoberfläche der Abdeckplatte (20) mit einer zweiten geneigten Oberfläche versehen ist und sich die zweite geneigte Oberfläche nach oben und schräg zu einer oberen Kante der Abdeckplatte in einer Richtung zu einer Mittelachse des Sockelkörpers (10) erstreckt.

4. Lidar-Sockel nach einem der Ansprüche 1 bis 3, wobei ein Dichtungsring (30) zwischen der Abdeckplatte (20) und dem Sockelkörper (10) bereitgestellt ist, der Dichtungsring mit einer Einkerbung (30a) versehen ist und die Einkerbung angeordnet ist, um die Rille (12) freizuhalten.

5. Lidar-Sockel nach einem der Ansprüche 1 bis 4, wobei der Umleitungsspalt (20a) eine Vielzahl von Umleitungsspalten umfasst, die in Abständen entlang einer Umfangsrichtung des Sockelkörpers (10) angeordnet sind.

6. Lidar-Sockel nach Anspruch 5, wobei die Abdeckplatte (20) in einer Ringform ausgestaltet ist und die Abdeckplatte und der Sockelkörper (10) die Vielzahl von Umleitungsspalten definieren.

7. Lidar-Sockel nach Anspruch 5, wobei die Abdeckplatte (20) eine Vielzahl von Abdeckplatten umfasst, die in Abständen entlang der Umfangsrichtung des Sockelkörpers (10) angeordnet sind, und jede der Abdeckplatten und der Sockelkörper (10) jeweils den Umleitungsspalt definieren.

8. Lidar-Vorrichtung (1), umfassend:
eine Lidar-Baugruppe (200), die ein Gehäuse (201) umfasst; und
den Lidar-Sockel (100) nach einem der Ansprüche 1 bis 7, wobei das Gehäuse auf dem Sockelkörper (10) angebracht ist.

9. Autonomes Fahrzeug, umfassend:
die Lidar-Vorrichtung (1) nach Anspruch 8.

## Revendications

1. Base lidar (100), comprenant :
un corps de base (10) configuré pour installer un ensemble lidar (200) ; et
une plaque de recouvrement (20) disposée sur le corps de base, et un interstice de déviation (20a) étant défini entre la plaque de recouvrement et le corps de base, dans laquelle une sortie d'air (20b) de l'interstice de déviation est agencée de telle sorte que la sortie d'air (20b) soit vers l'ensemble lidar dans un cas où l'ensemble lidar (200) est installé sur le corps de base (10) ;
dans laquelle le corps de base (10) est doté d'un passage d'air (11), et une extrémité de sortie d'air du passage d'air est en communication avec l'interstice de déviation (20a) ;
dans laquelle une paroi extérieure du corps de base (10) est dotée d'une rainure (12), la plaque de recouvrement (20) et la rainure définissent l'interstice de déviation (20a), et l'extrémité de sortie d'air du passage d'air s'étend jusqu'à une paroi inférieure de la rainure ;
dans laquelle un bord supérieur de la rainure (12) est doté d'une première surface inclinée (12a), et une surface latérale intérieure de la plaque de recouvrement (20) est espacée de la première surface inclinée pour définir la sortie d'air de l'interstice de déviation (20a) ;
**caractérisée en ce que** :
la paroi extérieure du corps de base (10) comprend une surface en forme d'arc (10c) formée par un bord supérieur de la première surface inclinée (12a) s'étendant vers le haut en une forme d'arc, et la surface en forme d'arc est évidée vers l'intérieur.

2. Base lidar selon la revendication 1, dans laquelle le corps de base est configuré en une forme d'anneau pour définir un trou central (10b), et le trou central est configuré pour installer l'ensemble lidar, et dans laquelle une direction d'extension de l'interstice de déviation (20a) est vers un axe central du corps de base et est inclinée vers le haut.

3. Base lidar selon la revendication 1 ou 2, dans laquelle une surface extérieure de la plaque de recouvrement (20) est dotée d'une deuxième surface inclinée, et la deuxième surface inclinée s'étend vers le haut et obliquement jusqu'à un bord supérieur de la plaque de recouvrement dans une direction vers un axe central du corps de base (10).

4. Base lidar selon l'une quelconque des revendications 1 à 3, dans laquelle un joint d'étanchéité (30) est fourni entre la plaque de recouvrement (20) et le corps de base (10), le joint d'étanchéité est doté d'une encoche (30a), et l'encoche est agencée pour rester à l'écart de la rainure (12).

5. Base lidar selon l'une quelconque des revendications 1 à 4, dans laquelle l'interstice de déviation (20a) comprend une pluralité d'interstices de déviation qui sont agencés à intervalles le long d'une direction circonférentielle du corps de base (10).

6. Base lidar selon la revendication 5, dans laquelle la plaque de recouvrement (20) est configurée en une forme d'anneau, et la plaque de recouvrement et le corps de base (10) définissent la pluralité des interstices de déviation.

7. Base lidar selon la revendication 5, dans laquelle la plaque de recouvrement (20) comprend une pluralité de plaques de recouvrement qui sont agencées à intervalles le long de la direction circonférentielle du corps de base (10), et chacune des plaques de recouvrement et le corps de base (10) définissent l'interstice de déviation respectivement.

8. Dispositif lidar (1), comprenant :
un ensemble lidar (200) qui comprend un boîtier (201) ; et
la base lidar (100) selon l'une quelconque des revendications 1 à 7, dans lequel le boîtier est installé sur le corps de base (10).

9. Véhicule autonome, comprenant :
le dispositif lidar (1) selon la revendication 8.
